# EUROPÄISCHE PATENTSCHRIFT

(11) **EP 3 385 803 B1**
(45) Veröffentlichungstag und Bekanntmachung des Hinweises auf die Patenterteilung: **18.11.2020**
(21) Anmeldenummer: 18164115.0
(22) Anmeldetag: 27.03.2018
(51) Int. Cl.: G05B 19/418

(54) **VERFAHREN ZUM BETREIBEN EINES LANGSTATORLINEARMOTORS**
METHOD FOR OPERATING A LONG STATOR LINEAR MOTOR
PROCÉDÉ DE FONCTIONNEMENT D'UN MOTEUR LINÉAIRE À STATOR DÉPLOYÉ

(30) Priorität: 04.04.2017 AT 502632017
(43) Veröffentlichungstag der Anmeldung: 10.10.2018
(73) Patentinhaber: B&R Industrial Automation GmbH, 5142 Eggelsberg (AT)
(72) Erfinder: Huber, Stefan, 5020 Salzburg (AT)
(74) Vertreter: Patentanwälte Pinter & Weiss OG

(56) Entgegenhaltungen:
- EP-A1- 3 015 933
- EP-A1- 3 109 998
- WO-A1-2012/170636

## Beschreibung

Die gegenständliche Erfindung betrifft ein Verfahren zum Betreiben einer Fördereinrichtung in Form eines Langstatorlinearmotors, wobei eine Mehrzahl von Transporteinheiten durch eine Anlagenregelung entlang einer Förderstrecke der Fördereinrichtung bewegt werden, wobei an zumindest einer ersten Position der Förderstrecke ein erster Triggerpunkt definiert wird und dem ersten Triggerpunkt ein erster, in der Anlagenregelung ausführbarer Programmcode zugewiesen wird, mit dem eine Transporteinheit gemäß eines definierten Bewegungsprofils entlang eines Streckenabschnittes der Förderstrecke bewegt wird, und dieser Programmcode für jede Transporteinheit, die den ersten Triggerpunkt erreicht, ausgeführt wird.

Die Erfindung betrifft eine Fördereinrichtung in Form eines Langstatorlinearmotors, bei dem eine Vielzahl von Transporteinheiten entlang einer definierten Förderstrecke bewegt werden. Dabei sind entlang der Förderstrecke eine Vielzahl von ortsfesten Antriebsspulen angeordnet, die den Stator des Langstatorlinearmotors bilden. Die Antriebsspulen werden bestromt, beispielsweise durch Anlegen einer elektrischen Spannung, um ein bewegtes Magnetfeld zu erzeugen. Das bewegte Magnetfeld wirkt mit Antriebsmagneten, in der Regel Permanentmagnete oder Elektromagnete, an einer Transporteinheit zusammen, um die Transporteinheit gemäß dem Motorprinzip zu bewegen. Die Antriebsspulen können einzeln und unabhängig voneinander von einer Regelungseinheit angesteuert werden. Das ermöglicht es gleichzeitig auch mehrere Transporteinheiten unabhängig voneinander entlang der Förderstrecke zu bewegen. Solche Fördereinrichtungen sind hinlänglich bekannt, beispielsweise aus der US 8,996,161 B2 oder der EP 3 109 998 A1.

Auch die US 3,908,113 A, die DE 10 2004 048 515 A1 und die DE 10 2013 218 394 A1 zeigen Linearmotor für Förderanwendungen. In diesen Dokumenten wird zusätzlich noch beschrieben, wie eine Weiche der Förderstrecke gesteuert werden kann, um eine Transporteinheit entlang verschiedener Pfade der Förderstrecke zu bewegen. Die Weichensteuerung erfolgt dabei entweder über eine eindeutige Identifikation der Transporteinheit und gespeicherten Schaltmustern oder in Abhängigkeit von einem Zustandsparameter der Transporteinheit.

Das Bewegungsprofil einer Transporteinheit wird normalerweise vorab geplant, um genau festzulegen, wie die Transporteinheit entlang der Förderstrecke zu bewegen ist (z.B. Position, Geschwindigkeit, Beschleunigung, Route). Bei einer Fördereinrichtung in Form eines Langstatorlinearmotors kann das durchaus komplex werden, da in der Regel sehr viele Transporteinheiten gleichzeitig bewegt werden und die Förderstrecke komplexe Geometrien, auch mit mehreren Streckenabschnitten, die beispielsweise mit Weichen miteinander verbunden sein können, aufweisen kann.

Für viele Anwendungen und Prozesse, die Fördereinrichtung in Form eines Langstatorlinearmotors zum Transport von Gegenständen verwenden, ist es allerdings vorteilhaft, wenn ein Bewegungsprofil einer Transporteinheit nicht fest und vorab definiert ist, sondern wenn das Bewegungsprofil zu bestimmten Zeitpunkten oder in Abhängigkeit von gewissen Kriterien zur Laufzeit, also während des Betriebes der Fördereinrichtung, geändert werden kann. Einen solchen Ansatz beschreibt beispielsweise die US 2016/0207717 A1. Darin wird eine Fördereinrichtung in Form eines Langstatorlinearmotors beschrieben, bei der ein Bewegungsprofil einer Transporteinheit in Abhängigkeit vom Zustand der transportierten Gegenstandes oder in Abhängigkeit von Zustand einer Bearbeitungsstation zur Bearbeitung des transportierten Gegenstandes adaptiert werden kann. Das Bewegungsprofil kann dabei sowohl hinsichtlich der Kinematik (z.B. durch Ändern der Geschwindigkeit), aber auch hinsichtlich der Route (z.B. durch Stellen einer Weiche) verändert werden. Die Entscheidung welches Bewegungsprofil abgefahren wird, wird an vorgegebenen Stellen entlang der Förderstrecke getroffen. Diese Entscheidung muss für jede einzelne Transporteinheit getroffen werden, was für die Steuerung und Regelung der Bewegung der Transporteinheit durchaus aufwendig ist.

In herkömmlichen Langstatorlinearmotor ist jeder Transporteinheit eine Anzahl von Funktionsblöcken in Form von Programmcode zugeordnet, mittels denen die notwendigen Funktionen der Transporteinheit ausgeführt werden können. Im Betrieb des Langstatorlinearmotors werden dann die notwendigen Funktionsblöcke ausgeführt. Beispielsweise gibt es einen Funktionsblock, mit dem eine lineare Bewegung der Transporteinheit ausgeführt wird, oder es gibt einen Funktionsblock mit dem die Transporteinheit auf eine externe Bewegung (z.B. eines Roboters) synchronisiert wird. Diese Funktionsblöcke sind für jede Transporteinheit am Langstatorlinearmotor vorhanden, d.h. im Wesentlichen, dass gleicher Programmcode mehrmals vorhanden sein muss. Hierbei werden zu einer Transporteinheit auch Funktionsblöcke initialisiert, die im Betrieb der Transporteinheit möglicherweise gar nicht benötigt werden. Wird eine neue Transporteinheit hinzugefügt, dann muss auch der Programmcode für die Funktionsblöcke dupliziert werden. Das erfordert natürlich einen großen Speicher. Abgesehen davon ist es damit kaum möglich eine Funktion im Betrieb zu ändern, weil das den Eingriff in eine Vielzahl von Programmcodes erfordern würde.

Es ist daher eine Aufgabe der gegenständlichen Erfindung ein Verfahren anzugeben, mit der Betrieb eines Langstatorlinearmotors mit einer Vielzahl von Transporteinheiten vereinfacht werden kann.

Diese Aufgabe wird erfindungsgemäß dadurch gelöst, indem jeder Transporteinheit ein Speicherbereich zugewiesen wird und in diesem Speicherbereich spezifische Daten der zugehörigen Transporteinheit gespeichert werden und am ersten Triggerpunkt spezifische Daten der sich am Triggerpunkt befindlichen Transporteinheit aus dem zugewiesenen Speicherbereich ausgelesen werden und mit einer im ersten ausführbaren Programmcode definierten Bedingung geprüft werden und abhängig vom Ausgang der Prüfung die weitere Bewegung der Transporteinheit entlang der Förderstrecke festgelegt wird. Mit der Erfindung wird nur mehr ein einziger Programmcode benötigt, um die Bewegung aller Transporteinheiten ab dem Triggerpunkt umzusetzen. Der Programmcode wird gegebenenfalls mehrmals hintereinander für verschiedene Transporteinheiten ausgeführt. Damit kann der Speicherbedarf für die für den Betrieb der Fördereinrichtung benötigte Software deutlich reduziert werden. Ferner ermöglicht das, die Funktionalität einfach für alle Transporteinheiten zu ändern, da dazu nur ein einziger Programmcode geändert werden muss, was unter Umständen sogar während des Betriebs der Fördereinrichtung möglich sein kann.

Erfindungsgemäß werden spezifische Daten der den ersten Triggerpunkt erreichenden Transporteinheit mit einer im ersten ausführbaren Programmcode definierten Bedingung geprüft und abhängig vom Ausgang der Prüfung die weitere Bewegung der Transporteinheit entlang der Förderstrecke festgelegt. Damit kann die Flexibilität der Funktionalität der Fördereinrichtung gesteigert werden. Das wird erfindungsgemäß so realisiert, dass jeder Transporteinheit ein Speicherbereich zugewiesen wird und in diesem Speicherbereich spezifische Daten der zugehörigen Transporteinheit gespeichert werden, die dann ausgelesen werden und mit einer definierten Bedingung geprüft werden können. Dieser Speicherbereich wird vorteilhafterweise beim Initialisieren der Fördereinrichtung zugewiesen, womit der Speicherbereich während des Betriebs fest zugeordnet bleiben kann und nicht geändert werden muss.

In einer vorteilhaften Erweiterung ist an zumindest einer zweiten Position der Förderstrecke ein zweiter Triggerpunkt definiert und dem zweiten Triggerpunkt ein zweiter ausführbarer Programmcode zugewiesen, mit dem eine weitere Funktionalität der Fördereinrichtung realisiert wird, wbei dieser zweite Programmcode für jede Transporteinheit, die den zweiten Triggerpunkt erreicht ausgeführt wird.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine mögliche Ausführung einer Fördereinrichtung mit einer Förderstrecke,
Fig.2 die Zuordnung von Triggerpunkten zu ausführbaren Programmcodes,
Fig.3 ein Beispiel einer Förderstrecke mit definierten Triggerpunkten und
Fig.4 und 5 weitere Beispiele einer Förderstrecke mit definierten Triggerpunkten.

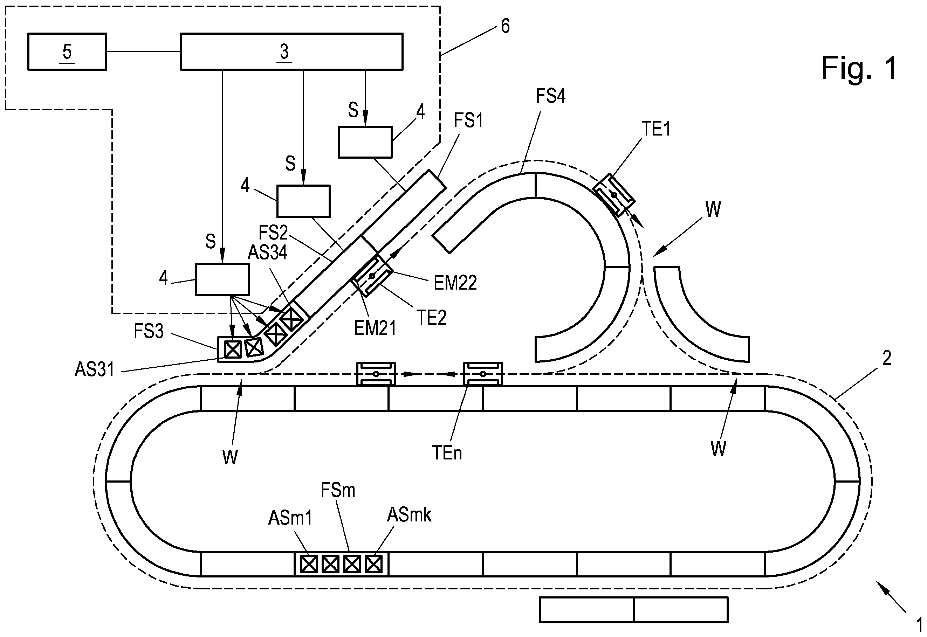

Die Erfindung betrifft eine Fördereinrichtung 1 in Form eines Langstatorlinearmotors, wobei eine Vielzahl von Transporteinheiten TEn (n≥1 ist ein Index, der für alle Transporteinheiten TE1, TE2, ... steht) entlang einer Förderstrecke 2 der Fördereinrichtung 1 bewegt werden. In Fig.1 ist beispielhaft ein beliebiger Aufbau einer Fördereinrichtung 1 mit einer Förderstrecke 2 (angedeutet durch die gestrichelte Linie) dargestellt. Die Fördereinrichtung 1 ist als Langstatorlinearmotor ausgeführt und es sind eine Vielzahl von Transporteinheiten TEn vorgesehen, die entlang der Förderstrecke 2 bewegt werden können. Die Förderstrecke 2 wird im Wesentlichen durch den Langstator des Langstatorlinearmotors 1 vorgegeben. Im gezeigten Ausführungsbeispiel sind eine Reihe von Fördersegmente FSm (m≥1 ist ein Index, der für alle Transporteinheiten FS1, FS2, ... steht) vorgesehen, die die Bahn der Transporteinheiten TEn, also die Förderstrecke 2, definieren. Ein Fördersegment FSm bildet dabei einen

Teil des Langstators des Langstatorlinearmotors. Die Fördersegmente FSm sind in einer geeigneten Konstruktion ortsfest angeordnet, beispielsweise an einer geeigneten Stützkonstruktion, und bilden in der Regel auch Führungselemente aus, mit denen die Transporteinheiten TEn an der Förderstrecke 2 gehalten und geführt werden können. Einzelne Fördersegmente FSm, wie beispielsweise FS1 und FS4 in Fig.1, können an verschiedenen Seiten (in Bewegungsrichtung der Transporteinheit TEn gesehen) der Förderstrecke 2 angeordnet sein und können sich in Bewegungsrichtung auch zum Teil überlappen, insbesondere an Stellen der Förderstrecke 2 an der ein Übergang von einem Streckenabschnitt auf einen anderen Streckenabschnitt stattfindet. Es kann auch vorgesehen sein, dass abschnittsweise an beiden Seiten der Förderstrecke 2 Fördersegmente FSm angeordnet sind, wie ebenfalls in Fig.1 angedeutet. Es können auch Weichen W vorgesehen sein, um Übergänge zwischen verschiedenen Streckenabschnitten zu realisieren. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann.

Jedes Fördersegment FSm umfasst eine Anzahl k≥1 von Antriebsspulen ASmk, wobei die Anzahl k nicht bei jedem Fördersegmente FSm gleich sein muss. In Fig.1 sind der Übersicht halber nur Antriebsspulen ASmk einiger Fördersegmente FSm dargestellt. Jede Transporteinheit TEn umfasst eine Anzahl l≥1 von Antriebsmagnete EMnl, vorzugsweise an beiden Seiten (bezogen auf die Bewegungsrichtung, die durch die Pfeile an den Transporteinheiten TEn angedeutet ist) der Transporteinheit TEn. Die Antriebsspulen ASmk wirken im Betrieb der Fördereinrichtung 1 in bekannter Weise nach dem Motorprinzip mit den Antriebsmagneten EMnl der Transporteinheiten TEn zusammen. Werden die Antriebsspulen ASmk im Bereich einer Transporteinheit TEn mit einem Spulenstrom bestromt, entsteht ein magnetischer Fluss der in Zusammenwirken mit den Antriebsmagneten EMnl eine Kraft auf die Transporteinheit TEn ausübt. Diese Kraft kann je nach Spulenstrom bekanntermaßen eine vortriebskraftbildende und eine seitenkraftbildende Kraftkomponenten umfassen. Die vortriebskraftbildende Kraftkomponente dient im Wesentlichen der Bewegung der Transporteinheit TEn in Bewegungsrichtung und die seitenkraftbildende Kraftkomponente kann beispielsweise zur Festlegung der Bahn der Transporteinheit TEn in einer Weiche W genutzt werden. Durch entsprechende Steuerung der Bestromung der Antriebsspulen ASmk wird ein bewegtes Magnetfeld erzeugt, um die Transporteinheit TEn entlang der Förderstrecke 2 zu bewegen. Auf diese Weise kann jede Transporteinheit TEn einzeln und unabhängig voneinander entlang der Förderstrecke 2 bewegt werden, indem die Antriebsspulen ASmk im Bereich jeder Transporteinheit TEn gemäß des gewünschten Bewegungsprofils (Position, Geschwindigkeit, Beschleunig, Route) mit einem entsprechenden Spulenstrom bestromt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEn, die Fördersegmente FSm, die Antriebsspulen ASmk, die Antriebsmagnete EMnl, usw. konstruktiv konkret ausgestaltet sind, weshalb auch darauf nicht näher eingegangen wird.

Um die Bewegung der einzelnen Transporteinheiten TEn zu steuern, ist eine Transporteinheitenregelung 3 vorgesehen, in der die Sollwerte S für die Bewegung der Transporteinheiten TEn, in der Regel Positionen pₙ, oder gleichwertig auch Geschwindigkeiten vₙ oder Vortriebskräfte F_{Vn}, generiert werden. Selbstverständlich können gleichwertig auch mehrere Transporteinheitenregelungen 3 vorgesehen sein, die jeweils einem Teil der Fördereinrichtung 1, z.B. einem Streckenabschnitt aus mehreren Fördersegmenten FSm, zugeordnet sind und die Bewegung der Transporteinheiten TEn auf diesem Teil kontrollieren. Zusätzlich können noch Segmentregelungseinheiten 4 vorgesehen sein, die einer Anzahl von Antriebsspulen ASmk zugeordnet sind, beispielsweise den Antriebsspulen ASmk eines Fördersegments FSm (oder auch mehreren Fördersegmenten FSm oder auch einem Teil eines Fördersegments FSm), und die die Sollwertvorgaben der zugehörigen Transporteinheitenregelung 3 für eine Transporteinheit TEn in Stellgrößen, wie beispielsweise in Spulenströme oder Spulenspannungen, für die Antriebsspulen ASmk des Fördersegments FSm umsetzen. Die Segmentregelungseinheiten 4 könnten aber auch in einer Transporteinheitenregelung 3 implementiert sein. In einer Segmentregelungseinheit 4 ist demnach ein geeigneter Regler implementiert, der die Sollwertvorgabe durch die Sollwerte S in eine geeignete Stellgröße für den Antrieb, beispielsweise in einen Spulenstrom oder eine Spulenspannung, umsetzt.

Der gewünschte Weg der Transporteinheiten TEn entlang der Förderstrecke 2 kann auch durch eine übergeordnete Fördereinrichtungsregelung 5 vorgegeben werden, in der beispielsweise eine Routenberechnung (welchen Weg soll eine Transporteinheit TEn nehmen), eine Weichenarbitrierung (welche Transporteinheit TEn darf in eine Weiche W einfahren), eine Deadlockvermeidung (z.B. blockieren sich zwei Transporteinheiten TEn gegenseitig), usw. stattfinden kann, um die Transporteinheiten TEn auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEn kann in der Transporteinheitenregelung 3 in Sollwertvorgaben für die Transporteinheiten TEn umgesetzt werden.

Die Fördereinrichtungsregelung 5, die Transporteinheitenregelung 3 und die Segmentregelungseinheit 4 (sofern diese vorhanden sind) können natürlich getrennt ausgeführt sein (beispielsweise verschiedene Hardware und Software), können aber natürlich auch beliebig integriert sein (teilweise gleiche Hardware auf der entsprechende Software läuft). In weiterer Folge wird daher nur mehr von einer Anlagenregelung 6 gesprochen.

Die Bewegung der Transporteinheiten TEn entlang der Förderstrecke 2 wird im Vorfeld zumindest abschnittsweise geplant, d.h. es wird ein Bewegungsprofil für diesen Abschnitt festgelegt. Beispielsweise kann es Streckenabschnitte der Fördereinrichtung 1 geben, wo Fertigungsprozesse, Handhabungsprozesse, Montageprozesse und ähnliches an einem Gegenstand, der mit einer Transporteinheit TEn transportiert wird, durchgeführt werden. Die Transporteinheit TEn muss dazu in diesem Streckenabschnitt mit einen vorgegebenen Bewegungsprofil (z.B. Position p, Geschwindigkeit v, Beschleunigung a) bewegt werden. Es kann auch Streckenabschnitte geben, in denen eine Transporteinheit TEn schnellstmöglich zu bewegen ist oder auf andere Transporteinheiten TEn warten muss oder zu einer anderen Transporteinheit oder zu einer externen Bewegung synchronisiert werden muss. Natürlich sind noch viele weitere Vorgaben für ein Bewegungsprofil denkbar. Daneben kann eine bestimmte Position der Förderstrecke 2, insbesondere auf komplexen Förderstrecken 2 mit vielen Streckenabschnitten und Weichen W, häufig auch auf verschiedenen Wegen erreicht werden, was ebenfalls zu planen ist.

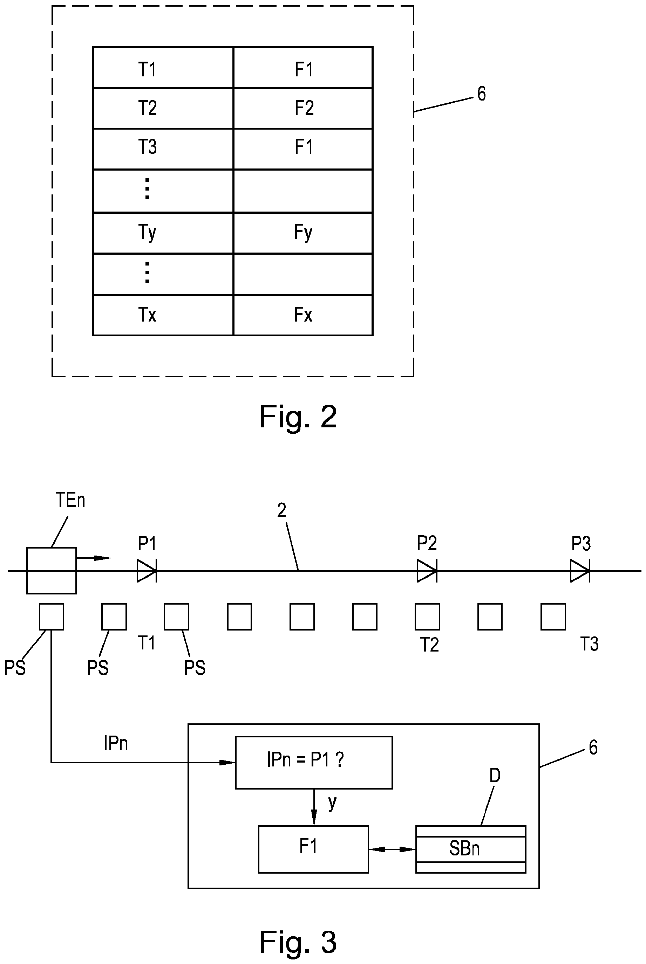

Um die Fördereinrichtung 1 in Form eines Langstatorlinearmotors einfach betrieben zu können, sind entlang der Förderstrecke 2 an definierten Positionen Px eine Anzahl x≥1 von Triggerpunkten Tx definiert. Einem Triggerpunkt Tx ist ein Funktionsblock in Form eines ausführbaren Programmcodes Fx zugewiesen, wie in Fig.2 angedeutet. Der Programmcode Fx ist in der Anlagenregelung 6 implementiert und kann dort ausgeführt werden. Natürlich ist es auch denkbar, dass mehreren Triggerpunkten Tx derselbe ausführbare Programmcode Fx zugewiesen ist, wie beispielsweise in der Fig.2 der Programmcode F1 den Triggerpunkten T1 und T3 zugeordnet ist. Der zugeordnete Programmcode Fx wird ausgeführt, wenn eine Transporteinheit Tn den Triggerpunkt Tx passiert. Das bedeutet, dass derselbe Programmcode Fx für jede Transporteinheit Tn ausgeführt wird, die diesen Triggerpunkt Tx passiert. Das bedeutet aber auch, dass ein Programmcode Fx unabhängig von den Transporteinheiten TEn ist. Damit muss der Programmcode zur Realisierung eine bestimmten Funktion der Fördereinrichtung 1 natürlich nur mehr ein einziges Mal vorhanden sein, da derselbe Programmcode Fx für alle den Triggerpunkt Tx passierenden Transporteinheiten TEn verwendet wird. Damit kann natürlich Speicher für Programmcode eingespart werden, da es nicht mehr notwendig ist, denselben Programmcode mehrfach zu speichern. Außerdem ist es dadurch einfach möglich eine Funktionalität der Fördereinrichtung 1 für alle Transporteinheit TEn zentral zu ändern, da dazu nur ein einziger Programmcode Fx geändert werden muss. Der einem Triggerpunkt Tx zugewiesene Programmcode Fx ist damit auch unabhängig von den Transporteinheiten TEn. Auf der anderen Seite bedeutet das aber natürlich auch, dass der Programmcode Fx gegebenenfalls hintereinander für verschiedene Transporteinheit Tn mehrmals ausgeführt werden muss, was unter Umständen mehr Rechenleistung erfordert. Mit der heute verfügbaren Hardware ist die dafür notwendige Rechenleistung aber sicherlich verfügbar.

Über die Triggerpunkte Tx, bzw. über die damit verbundenen Programmcodes Fx, wird die Funktion der Fördereinrichtung 1 zumindest entlang eines vorgegebenen Streckenabschnittes, vorzugsweise entlang der gesamten Förderstrecke 2, vorab geplant. Das bedeutet, dass jeder Programmcode Fx von jedem Triggerpunkt Tx auf dem Streckenabschnitt vorab erstellt und hinterlegt werden muss. Hierbei kann man sich natürlich vorgefertigter Programmcodes Fx bedienen, die beispielsweise in einer Programmcodebibliothek abgelegt sind, und/oder man kann Programmcode Fx auch anwendungsbezogen neu schreiben. Ein Programmcode Fx kann dabei natürlich ebenfalls wieder aus verschiedenen, vorzugsweise bereitgestellten, Softwaremodulen zusammengestellt sein, um die Programmierung zu vereinfachen. Die benötigten Programmcodes Fx werden dann in der Anlagenregelung 6 ausführbar abgelegt und den Triggerpunkten Tx zugewiesen. Neben den Programmcodes Fx für die Triggerpunkte ist in der Anlagenregelung 6 natürlich noch weitere Software implementiert, die parallel zu den Programmcodes Fx ausgeführt wird.

In der Anlagenregelung 6 sind die Istpositionen IPn der Transporteinheiten TEn bekannt. Hierfür sind in der Regel in der Fördereinrichtung 1, bzw. entlang der Förderstrecke 2, geeignete und hinlänglich bekannte Positionssensoren PS vorgesehen, mit denen die aktuellen Istpositionen IPn der Transporteinheiten TEn erfasst werden können. Nachdem auch die Positionen Px der Triggerpunkte Tx entlang der Förderstrecke 2 vorab definiert und damit in der Anlagenregelung 6 bekannt sind, kann in der Anlagenregelung 6 durch einfachen Positionsvergleich auf einfache Weise festgestellt werden, ob eine Transporteinheit TEn einen Triggerpunkt Tx passiert, wie in Fig.3 anhand einer einfachen Förderstrecke 2 mit drei Triggerpunkten T1, T2, T3 dargestellt. Hierbei kann als auslösendes Ereignis überprüft werden, ob eine Transporteinheit TEn einen Triggerpunkt Tx überfährt, oder ob sich eine Transporteinheit TEn innerhalb eines bestimmten vorgegebenen Bereichs um einen Triggerpunkt Tx befindet. Für die Bestimmung ob eine Transporteinheit TEn einen Triggerpunkt Tx passiert könnten in einer Näherung anstatt der Istpositionen IPn aber auch die in der Anlagenregelung 6 in der Regel vorhandenen Sollpositionen der Transporteinheiten TEn verwendet werden. Da in der Anlagenregelung 6 die Bewegung der Transporteinheit TEn geregelt wird (im Wesentlichen durch die Vorgabe der Sollpositionen und/oder Sollgeschwindigkeiten gemäß der durchzuführenden Bewegung), weiß die Anlagenregelung 6 auch, welche Transporteinheit TEn einen Triggerpunkt Tx passiert.

In Fig.3 wird entlang einer Förderstrecke 2 eine Transporteinheit TEn in Bewegungsrichtung (durch Pfeil angedeutet) bewegt. In der Anlagenregelung 6 wird die Istposition IPn der Transporteinheit TEn erfasst und durch Positionsvergleich überwacht, ob ein Triggerpunkt Tx an der Position P1 passiert wird. Erreicht die Transporteinheit TEn den Triggerpunkt T1 an der Position P1, wird der Programmcode F1, der diesem Triggerpunkt T1 zugeordnet ist, für die Transporteinheit TE1 ausgeführt. Wird die Transporteinheit TE1 weiterbewegt, erreicht diese irgendwann den nächsten Triggerpunkt T2 an der Position P2, womit der diesem Triggerpunkt T2 zugeordnete Programmcode F2 für die Transporteinheit TE1 ausgeführt wird, usw. In der Zwischenzeit kann natürlich eine andere Transporteinheit TEn wieder den Triggerpunkt T1 passieren.

In einem Streckenabschnitt der Förderstrecke 2 auf dem die Fördereinrichtung 1 auf Basis dieses Prinzips betrieben wird, ist zumindest ein Triggerpunkt Tx an einer Position Px vorhanden an dem ein Programmcode Fx ausgeführt wird, mit dem eine Bewegung einer Transporteinheit TEn gemäß einem gewünschten Bewegungsprofil entlang eines Streckenabschnittes der Förderstrecke 2 gesteuert wird. Ein solcher Programmcode Fx für die Bewegung einer Transporteinheit TEn kann beispielsweise eine lineare Bewegung der Transporteinheit TEn realisieren, also z.B. Bewegung mit einer konstanten Geschwindigkeit zu einer vorgegebenen Zielposition. Natürlich sind auch weitere Bewegungsprofile auf dem Streckenabschnitt denkbar, beispielsweise das schnellstmögliche Anfahren einer Zielposition oder die Synchronisation einer Transporteinheit TEn mit einer externen Bewegung, z.B. eines Werkzeugs eines Roboters, wobei die Sollwerte für die Bewegung von der externen Bewegung erhalten werden. Ein Bewegungsprofil ist dabei grundsätzlich ein zeitlicher Verlauf eines Parameters der Bewegung, beispielsweise ein Geschwindigkeits- oder Positionsprofil über der Zeit.

Sinnvollerweise wird die Bewegung einer Transporteinheit TEn durch einen Programmcode F1 von einem ersten Triggerpunkt T1 zu einem folgenden Triggerpunkt T3 geregelt. Erreicht die Transporteinheit TEn den folgenden Triggerpunkt T3 wird der zugewiesene Programmcode F3 ausgeführt, der z.B. die Bewegung der Transporteinheit TEn fortsetzt. Auf diese Weise kann die Bewegung der Transporteinheit TEn entlang der gesamten Förderstrecke 2, oder zumindest entlang eines Streckenabschnittes der Förderstrecke 2, geregelt werden.

Es sind aber auch Programmcodes denkbar, die eine andere Funktionalitäten der Fördereinrichtung 1 als die Ausführung einer Bewegung einer Transporteinheit TEn realisieren. Vorteilhafterweise kann vorgesehen sein, dass an zumindest einer Position Py der Förderstrecke 2 ein Triggerpunkt Ty vorgesehen ist, an dem ein Programmcode Fy ausgeführt wird, der diese weitere Funktionalität realisiert. Beispielsweise könnte an einem Triggerpunkt T2 in der Fig.3 durch einen Programmcode F2 an einer Anzeige der Fördereinrichtung 1 etwas angezeigt, beispielsweise visualisiert, werden oder es könnte ein Zähler aktualisiert werden, mit dem die Anzahl der Transporteinheit TEn mit einer bestimmten Eigenschaft (z.B. was damit transportiert wird) gezählt werden. Hier sind praktisch keine Grenzen gesetzt und es kann alles realisiert werden, was durch Programmierung implementiert werden kann.

In einem Programmcode Fx kann auch die Abfrage einer Bedingung implementiert sein, was es ermöglicht, die durchzuführende Funktion abhängig von einer Bedingung zu machen. Damit kann beispielsweise entschieden werden, entlang welchen Pfades eine Transporteinheit TEn an einer Weiche weitergeführt wird, oder es kann auf das Eintreten eines bestimmten Ereignisses gewartet werden, z.B. dass eine Bearbeitungsstation frei wird. Hier sind praktisch keine Grenzen gesetzt und es kann alles realisiert werden, was durch Programmierung implementiert werden kann.

Ein Triggerpunkt Tx kann auch aktivierbar und deaktivierbar sein. Beispielsweise könnte die Anlagenregelung 6 oder das Bedienpersonal für die Fördereinrichtung 1 bei Bedarf einen bestimmten Triggerpunkt Tx aktivieren oder deaktivieren. Beispielsweise könnte der Triggerpunkt T2 an einer Weiche positioniert sein und die Anlagenregelung 6 könnte den Befehl geben, eine bestimmte Transporteinheit TEn über die Weiche aus der Förderstrecke 2 auszuschleusen. Dazu muss der Triggerpunkt T2 nicht permanent aktiviert sein, sondern kann nur anlassbezogen aktiviert werden. In diesem Zusammenhang könnte auch vorgesehen sein, dass ein erster Triggerpunkt T1 einen anderen Triggerpunkt Tx aktiviert oder deaktiviert, beispielsweise abhängig von der Überprüfung einer Bedingung. Beispielsweise könnte der weitere Bewegungspfad aufgrund eines Zählers gewählt werden, z.B. hundert Transporteinheiten fahren links, dann fahren hundert Transporteinheiten rechts.

In einer vorteilhaften Ausgestaltung der Erfindung ist jeder Transporteinheit TEn ein Speicherbereich SBn eines Datenspeichers D, beispielsweise in der Anlagenregelung 6, zugewiesen, indem Daten gespeichert werden, die spezifisch für die Transporteinheit TEn sind. Spezifisch für die Transporteinheit TEn bedeutet dabei insbesondere Daten zum Zustand der Transporteinheit TEn, Daten zum transportierten Gegenstand und/oder Daten zum Zustand des transportierten Gegenstandes. Der Speicherbereich SBn wird beispielsweise beim Initialisieren der Fördereinrichtung 1, z.B. beim Einschalten, vergeben und wird im Betrieb der Fördereinrichtung 1 nicht geändert. Einer neu hinkommenden Transporteinheit TEn wird ein Speicherbereich SBn zugewiesen. Wird eine Transporteinheit TEn entfernt, wird der zugehörige Speicherbereich SBn freigegeben. Auf diese Weise ist es auch nicht erforderlich, einer Transporteinheit TEn eine eindeutige Identifikation zuzuordnen, die an der Transporteinheit TEn gespeichert werden müsste, da alleine anhand der bekannten Istposition IPn (bzw. Sollposition SPn) einer Transporteinheit TEn jede Transporteinheit TEn identifziert werden kann, und die benötigten Daten aus dem Speicherbereich SBn ausgelesen oder in diesen geschrieben werden können.

Der Speicherbereich SBn könnte sich zwar auf der Transporteinheit TEn selbst befinden, ist aber vorzugsweise in der Anlagenregelung 6 vorgesehen. Die Anlagenregelung 6 kann den Datenspeicher selbst verwalten und kann jeder Transporteinheit TEn einen beliebigen, aber nach dem Zuweisen festen, Speicherbereich SBn zuweisen. Außerhalb der Anlagenregelung 6 oder außerhalb der Transporteinheit TEn ist es nicht erforderlich zu wissen, wo sich dieser Speicherbereich SBn befindet (also z.B. an welcher Speicheradresse welches Datenspeichers der Anlagenregelung 6). Es ist daher auch nicht vorzusehen, eine Transporteinheit TEn über den Speicherbereich SBn (oder dessen Speicheradresse) zu adressieren. Es ist lediglich eine Softwarefunktion, z.B. in der Anlagenregelung 6, zu implementieren, die den einer Transporteinheit TEn zugewiesenen Speicherbereich SBn, insbesondere an einem Triggerpunkt Tx, auslesen kann. Hierbei wird diejenige Transporteinheit TEn, oder der zugewiesene Speicherbereich SBn, angesprochen, die sich gerade an einem Triggerpunkt Tx befindet.

Daten zum Zustand der Transporteinheit TEn können beispielsweise der Zeitpunkt einer letzten Wartung, die Betriebsstunden, die zurückgelegte Wegstrecke, usw. sein. Daten zum transportierten Gegenstand können beispielsweise Art oder Typ des Gegenstandes, Eigenschaft des Gegenstandes (z.B. Farbe), ob überhaupt ein Gegenstand vorhanden ist, usw. sein. Daten zum Zustand des transportierten Gegenstandes können beispielsweise der Füllstand, die Temperatur, das Gewicht, der Bearbeitungszustand des Gegenstandes, usw. sein. Diese Aufzählung ist natürlich nur beispielhaft und in keiner Weise abschließend. Je nach Fördereinrichtung 1 und Anwendung können natürlich verschiedenste Daten gespeichert werden.

Diese Daten einer Transporteinheit TEn werden natürlich laufend während des Betriebes der Fördereinrichtung 1 in den zugeordneten Speicherbereich SBn geschrieben oder aktualisiert. Das könnte wiederum durch geeignete Programmcodes Fx, oder Funktionen in einem Programmcode, an Triggerpunkten Tx erfolgen. Auf diese Weise stellt der Inhalt des Speicherbereichs SBn immer den aktuellen Zustand der Transporteinheit TEn dar. Beispielsweise könnte im Beispiel der Fig.2 an einem Triggerpunkt Tx die mit der Transporteinheit TEn zurückgelegte Wegstrecke im Speicherbereich SBn aktualisiert werden.

An einem Triggerpunkt Tx kann daher im zugewiesenen Programmcode Fx eine Bedingung implementiert sein, die von den für die Transporteinheit TEn spezifischen Daten im zugewiesenen Speicherbereich SBn abhängig ist. Diese Bedingung wird durch den Programmcode Fx geprüft und je nach Ausgang der Prüfung durch den Programmcode Fx eine entsprechende Handlung realisiert, beispielsweise die weitere Bewegung der Transporteinheit TEn realisiert. Dabei kann die Bewegung der Transporteinheit TEn über das Bewegungsprofil, über die Art der Regelung der Bewegung (z.B. externe Sollwerte) oder auch über die gewählte Route der Transporteinheit TEn beeinflusst werden. Das Bewegungsprofil kann beispielsweise durch die Parameter der Bewegung geändert werden, beispielsweise durch Setzen einer neuen zulässigen Maximalgeschwindigkeit oder Beschleunigungslimits, durch Erstellen eines neuen, adaptierten oder überhaupt eines Bewegungsprofils, usw. Die Art der Regelung kann beispielsweise von Vorgabe einer Zielposition auf Kopplung mit externer Bewegung umgeschaltet werden, usw. Die Route der Transporteinheit TEn kann beispielsweise durch Stellen einer Weiche W verändert werden.

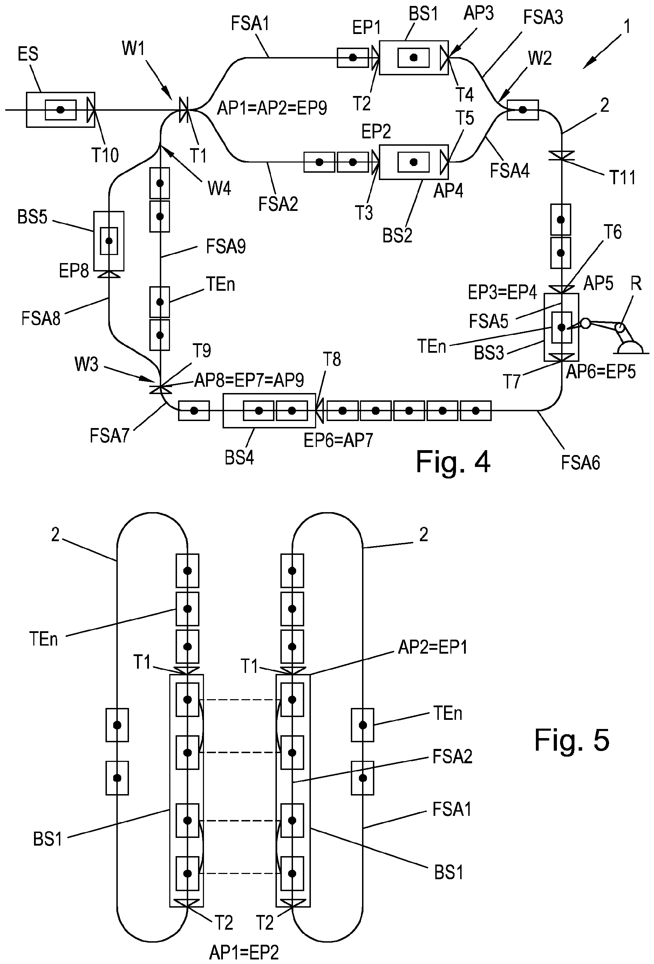

Das erfindungsgemäße Prinzip wird nachfolgend mit Bezugnahme auf die Fig.4 anhand eines Ausführungsbeispiels einer Fördereinrichtung 1 erläutert.

Fig.4 zeigt eine Fördereinrichtung 1 mit einer Förderstrecke 2, entlang der eine Vielzahl von Transporteinheiten TEn bewegt werden. Die Förderstrecke 2 umfasst auch Abschnitte mit mehreren Pfaden, die über Weichen W erreichbar sind. Die Förderstrecke 2 ist für die Bewegungsplanung der Transporteinheiten TEn in eine Anzahl p≥1 von Förderstreckenabschnitten FSAp unterteilt, was aber nicht unbedingt notwendig ist. Jeder Förderstreckenabschnitt FSAp hat einen Anfangspunkt APp und einen Endpunkt EPp, wie in Fig.4 für einige Förderstreckenabschnitte FSAp dargestellt. Ein Anfangspunkt APp oder ein Endpunkt EPp von verschiedenen Förderstreckenabschnitten FSAp kann natürlich auch zusammenfallen. Einzelne Förderstreckenabschnitte FSAp können durch Weichen W verbunden sein. Ebenso können Förderstreckenabschnitte FSAp auch teilweise zusammenfallen.

In Fig.4 ist beispielsweise ein erster Förderstreckenabschnitt FSA1 zwischen dem Anfangspunkt AP1 und dem Endpunkt EP1 definiert. Am Endpunkt EP1 beginnt eine Bearbeitungsstation BS1, in der irgendwelche Bearbeitungsvorgänge an einem mit einer Transporteinheit TEn transportierten Gegenstand stattfindet. Die Transporteinheit TEn wird hier in der Bearbeitungsstation BS1 durch die Bearbeitungsstation BS1 selbst durchbewegt, weshalb in diesem Bereich kein Förderstreckenabschnitt FSAp benötigt wird. Am Ende der Bearbeitungsstation BS1 beginnt an einem Anfangspunkt AP3 ein weiterer Förderstreckenabschnitt FSA3, der an einem Endpunkt EP3 endet. Um einen höheren Durchsatz zu ermöglichen ist parallel zu ersten Bearbeitungsstation BS1 eine zweite Bearbeitungsstation BS2 vorgesehen, dieser Pfad über die zweite Bearbeitungsstation BS2 wird durch die Förderstreckenabschnitte FSA2, FSA4 gebildet. In dieser Konfiguration fallen die Anfangspunkte AP1, AP2 der Förderstreckenabschnitte FSA1, FSA2 zusammen, ebenso wie die Endpunkte EP3, EP4 der Förderstreckenabschnitte FSA3, FSA4. Die Förderstreckenabschnitte FSA1, FSA3 sind an den Anfangspunkten AP1, AP2 durch eine Weiche W1 miteinander verbunden. Die Förderstreckenabschnitte FSA3, FSA4 überlappen sich teilweise ab einer Weiche W2, an der die Förderstreckenabschnitte FSA3, FSA4 zusammengeführt werden.

In der Bearbeitungsstation BS3 findet beispielsweise eine Bearbeitung des transportierten Gegenstandes mittels eines Roboters R statt, wobei die Bearbeitung während der Bewegung der Transporteinheit TEn, die den Gegenstand transportiert, stattfinden soll. Dazu wird für die Bearbeitungsstation BS3 ein Förderstreckenabschnitt FSA5 definiert, auf dem die Bewegung der Transporteinheit TEn mit der externen Bewegung des Roboterarmes des Roboters R synchronisiert wird. Das Bewegungsprofil ist auf diesem Förderstreckenabschnitt FSA5 somit extern vorgegeben, d.h., dass die Regelung der Bewegung der Transporteinheit TEn auf dem Förderstreckenabschnitt FSA5 die Sollwerte von extern, beispielsweise von der Robotersteuerung, erhält.

Auf den Förderstreckenabschnitten FSAp kann vorab ein Bewegungsprofil für eine Transporteinheit TEn geplant werden. Es ist allerdings anzumerken, dass für verschiedene Transporteinheiten TEn auf einem Förderstreckenabschnitt FSAp auch verschiedene Bewegungsprofile geplant werden können. Ein Bewegungsprofil ist beispielsweise als Geschwindigkeitsprofil über Zeit oder über Weg definiert mit einer Anfangs- und Endgeschwindigkeit, mit Beschleunigungen (was natürlich auch eine negative Beschleunigung zum Bremsen umfasst) zu verschiedenen Zeitpunkten oder Positionen, mit Vorgaben hinsichtlich des Rucks (zeitliche Ableitung der Beschleunigung), usw. definiert. Aus dem Bewegungsprofil kann dann in jedem Zeitschritt der Regelung der Bewegung der Transporteinheit TEn ein Sollwert S abgeleitet werden, aus der dann eine einzustellende Stellgröße (z.B. eine Spulenspannung einer oder mehrerer Antriebsspule(n) ASmk) berechnet wird. Es ist aber auch möglich, dass lediglich eine Zielposition (z.B. die Endposition EP1) vorab geplant wird und die Regelung selbst festlegt, wie diese Zielposition angefahren wird, d.h. die Regelung erstellt sich selbst ein geeignetes Bewegungsprofil.

In einer Bearbeitungsstation BS4 auf einem Förderstreckenabschnitten FSA7 wird beispielsweise eine Inspektion der mit den Transporteinheiten TEn transportierten Gegenständen durchgeführt. Hierbei werden die Transporteinheit TEn mittels der Fördereinrichtung 1 durch die Bearbeitungsstation BS4 bewegt.

Zur Realisierung der gewünschten Funktion entlang der Förderstrecke 2 sind an verschiedenen Positionen Px eine Anzahl x≥1 von Triggerpunkten Tx definiert. Diesen sind Programmcodes Fx zugewiesen, die die gewünschten Funktionen implementieren.

Am Triggerpunkt T1 kann beispielsweise mit dem zugewiesenen Programmcode F1 mit einer Bedingung der Zustand der Förderstreckenabschnitte FSA1, FSA2 abgefragt werden, beispielsweise wieviele Transporteinheiten TEn sich derzeit darauf befinden. Eine Transporteinheit TEn die den Triggerpunkt T1 erreicht, wird dann durch Stellen der Weiche W1 auf den Förderstreckenabschnitt FSA1, FSA2 geleitet, auf dem sich weniger Transporteinheiten TEn befinden. Am Triggerpunkt T1 könnte aber in einer definierten Bedingung auch ein Zustand der Transporteinheit TEn, die den Triggerpunkt T1 erreicht, selbst abgefragt werden, beispielsweise welcher Gegenstand (beispielsweise Ware 1 oder Ware 2?, oder Gegenstand vorhanden oder kein Gegenstand vorhanden?, oder Gegenstand voll oder leer?, usw.) auf der Transporteinheit TEn bewegt wird. Je nach Ergebnis der abgefragten Bedingung könnte die Transporteinheit TEn dann auf den richtigen Förderstreckenabschnitt FSA1, FSA2 gelenkt werden, um die Bearbeitung in der richtigen Bearbeitungsstation BS1 oder BS2 zu erfahren.

Am Triggerpunkt T1 könnte beispielsweise im zugeordneten Programmcode F1 die folgende Bedingung abgefragt werden:
Wenn Gegenstand auf Transporteinheit TEn vom Typ A dann Route A über Förderstreckenabschnitt FSA1. Die Bewegung erfolgt mit dem Programmcode F1 mit dem darauf definierten Bewegungsprofil mit Zielposition Endpunkt EP1. Wenn Gegenstand auf Transporteinheit TEn nicht vom Typ A dann Route B über Förderstreckenabschnitt FSA2. Die Bewegung erfolgt mit dem Programmcode F2 mit dem darauf definierten Bewegungsprofil mit Zielposition Endpunkt EP2.

Ebenso könnte ein Zustand einer Bearbeitungsstation BS1, BS2 auf dem Förderstreckenabschnitte FSA3, FSA4 mit einer Bedingung abgefragt werden. Ist die Bearbeitungsstation BS1 beispielsweise außer Betrieb, dann wird jede Transporteinheit TEn am Triggerpunkt T1 auf den Förderstreckenabschnitt FSA2 geleitet. Der Programmcode F1 realisiert auch die Bewegung einer Transporteinheit TEn auf dem Förderstreckenabschnitt FSA1 oder FSA2 gemäß dem vorgegebenen Bewegungsprofil, beispielsweise bis zu einem nächsten Triggerpunkt T2, T3 am jeweiligen Eingang der Bearbeitungsstation BS1, BS2, was hier auch das Stellen der Weiche W1 umfasst. Mit dem zugewiesenen Programmcode F2, F3 an den Triggerpunkten T2, T3 könnte beispielsweise die Übergabe der Transporteinheit TEn an die jeweilige Bearbeitungsstation BS1, BS2 realisiert sein.

Am Ausgang der Bearbeitungsstation BS1, BS2 ist jeweils ein weiterer Triggerpunkt T4, T5 vorgesehen, an dem über die zugeordneten Programmcodes F4, F5 die Bewegung der Transporteinheit TEn bis zum nächsten Triggerpunkt T6 realisiert ist. In diesem Fall könnte derselbe Programmcode für beide Triggerpunkte T4, T5 verwendet werden, weil dieselbe Bewegung zum selben Ziel durchgeführt wird.

Am Triggerpunkt T6 wird durch den Programmcode F6 der Bewegungsmodus geändert, da am Förderstreckenabschnitten FSA5 die Synchronisation der Transporteinheit TEn mit einer externen Bewegung erfolgt. Der Bewegungsmodus wird am Triggerpunkt T7 am Ausgang der Bearbeitungsstation BS3 wieder geändert und die Transporteinheit TEn zum Eingang der Bearbeitungsstation BS4 bewegt. Am dortigen Triggerpunkt T8 kann wieder die Bewegung der Transporteinheit TEn geändert werden, beispielsweise in dem eine geringere Geschwindigkeit realisiert wird.

Am Triggerpunkt T9 kann das Ergebnis der Inspektion in der Bearbeitungsstation BS4 abgefragt werden. Es könnte auch der Zustand einer Transporteinheit TEn abgefragt werden. Im Falle eines unerwünschten Zustandes, also wenn beispielsweise die Inspektion einen fehlerhaften Gegenstand erkannt hat oder wenn die Transporteinheit TEn gewartet werden muss, beispielsweise weil die Transporteinheit TEn eine vorgegebenen Anzahl von zurückgelegten Metern erreicht hat, wird an der Weiche W3 durch den Programmcode F9 des Triggerpunktes T9 auf den Förderstreckenabschnitt FSA8 umgelenkt.

Am Triggerpunkt T9 könnte im zugeordneten Programmcode F9 beispielsweise die folgende Bedingung abgefragt werden:
Wenn für Transporteinheit TEn die zurückgelegte Wegstrecke < vorgegebenen Wert, dann Route A über Förderstreckenabschnitt FSA9. Die Bewegung erfolgt mit dem Programmcode F9 mit dem definierten Bewegungsprofil mit Zielposition Endpunkt EP9. Wenn für Transporteinheit TEn die zurückgelegte Wegstrecke ≥ vorgegebenen Wert, dann Route B über Förderstreckenabschnitt FSA8. Die Bewegung erfolgt mit dem definierten Bewegungsprofil mit Zielposition Endpunkt EP8 zur Wartungsstation BS5. Am Förderstreckenabschnitt FSA8 ist aber beispielsweise kein Bewegungsprofil vorab geplant worden. Wird eine Transporteinheit TEn auf diesen Förderstreckenabschnitt FSA8 umgelenkt, dann erstellt die Anlagenregelung 6 ein geeignetes Bewegungsprofil, beispielsweise raschestmögliche Bewegung zu einer Wartungsstation BS5 unter Einhaltung vorgegebener kinematischer Limits (z.B. maximale Beschleunigung, Ruck, usw.) und gegebenenfalls unter Vermeidung von Kollisionen zwischen Transporteinheiten TEn.

Wird die Transporteinheit TEn an der Wartungsstation BS5 von der Fördereinrichtung 1 entfernt, so wird der zugewiesene Speicherbereich SBn vorzugsweise freigegeben.

Eine neue Transporteinheit TEn kann an einer Einschleusestation ES in die Fördereinrichtung 1 eingeschleust werden. An der Einschleusestation Es wird beispielsweise für eine neue Transporteinheit TEn der Speicherbereich SBn zugewiesen und danach die Transporteinheit TEn mit dem Programmcode F10 vom Triggerpunkt T10 zum Triggerpunkt T1 bewegt. Das Zuweisen des Speicherbereichs SBn könnte dabei auch durch den Programmcode F10 am Triggerpunkt T10 erfolgen.

Natürlich sind auch weitere Triggerpunkte Tx entlang der Förderstrecke 2 denkbar. Lediglich beispielhaft wird an einem Triggerpunkt T11 mit einem zugewiesenen Programmcode F11 gezählt, wie viele Gegenstände eines bestimmten Typs am Triggerpunkt T11 vorbeikommen und eine Anzeige der Fördereinrichtung 1 entsprechend aktualisiert.

Ein weiteres Ausführungsbeispiel wird mit Bezugnahme auf die Fig.5 erläutert. Hier sind zwei separate Förderstrecken 2 nebeneinander angeordnet. Die Förderstrecken 2 bilden jeweils einen geschlossenen Kreis, und es sind darauf jeweils zwei Förderstreckenabschnitte FSA1, FSA2 definiert. Der Förderstreckenabschnitt FSA1 dient der Zurückbewegung der Transporteinheiten TEn vom Ausgang einer Bearbeitungsstation BS1 (Anfangspunkt AP1, Endpunkt EP2) zum Eingang der Bearbeitungsstation BS1 (Endpunkt EP1, Anfangspunkt EP2). Am Eingang der Bearbeitungsstation BS1 (Endpunkt EP1, Anfangspunkt EP2) ist jeweils ein Triggerpunkt T1 mit einem Programmcode F1 definiert, der den Zustand der Bearbeitungsstation BS1 abfragt. Im Fehlerfall, oder auch wenn gerade keine Transporteinheit TEn an der benachbarten Förderstrecke 2 verfügbar ist, wird die Transporteinheit TEn am Triggerpunkt T1 gestoppt. Ansonsten fährt die Transporteinheit TEn in die Bearbeitungsstation BS1 ein. Auf dem Förderstreckenabschnitt FSA2 ist als Bewegungsprofil die Synchronisation der Bewegung (angedeutet durch die gestrichelte Linie) der Transporteinheit TEn mit einer Transporteinheit TEn in der Bearbeitungsstation BS1 der benachbarten Förderstrecke 2 definiert.

Am Ausgang der Bearbeitungsstation BS1 ist jeweils ein Triggerpunkt T2 angeordnet, an dem der Bewegungsmodus der Transporteinheit TEn umgeschaltet wird. Auf dem Förderstreckenabschnitt FSA1 sollen die Transporteinheiten TEn mit der Fördereinrichtung 1 beispielsweise als Bewegungsprofil so rasch wie möglich zum Eingang der Bearbeitungsstation BS1 bewegt werden, was vorab durch Vorgabe einer Zielposition (Endpunkt EP1) mit maximaler Geschwindigkeit definiert werden kann.

Es wäre aber auch denkbar, dass die Rückbewegung vom Ausgang der Bearbeitungsstation BS1 zum Eingang der Bearbeitungsstation BS1 nicht mit der Fördereinrichtung 1 realisiert wird, sondern mit einem beliebigen anderen Fördermittel, beispielsweise einem Förderband. Am Triggerpunkt T2 könnte dann beispielsweise mit dem Programmcode T2 die Übergabe an das andere Fördermittel implementiert sein. In diesem Fall wäre die Förderstrecke 2 auf den Förderstreckenabschnitt FSA2 in der Bearbeitungsstation BS1 reduziert.

Für die Regelung der Bewegung einer Transporteinheit TEn erzeugt ein Programmcode Fx in jedem Zeitschritt der Regelung, typischerweise im Bereich einiger Millisekunden, für eine Transporteinheit TEn beispielsweise die Sollwerte der Bewegung (Position und/oder Geschwindigkeit) gemäß dem zu realisierenden Bewegungsprofil. Ein Programmcode Fx kann die Sollwerte in jedem Zeitschritt der Regelung auch aus einer anderen Quelle einlesen, beispielsweise im Falle einer Synchronisation der Bewegung mit einer anderen Bewegung, z.B. eines Roboters R. Der Sollwert wird dann in der Anlagenregelung 6 in jedem Zeitschritt gemäß der implementierten Regelung in entsprechende Stellgrößen, beispielsweise Spulenspannungen der Antriebsspulen ASmk, umgerechnet. Wird ein Programmcode Fx mehrmals verwendet, dann ist dieser natürlich in einem Zeitschritt der Regelung mehrmals für verschiedene Transporteinheiten TEn auszuführen, was mit verfügbarer Hardware und Rechenleistung möglich ist.

## Patentansprüche

1. Verfahren zum Betreiben einer Fördereinrichtung (1) in Form eines Langstatorlinearmotors wobei eine Mehrzahl von Transporteinheiten (TEn) durch eine Anlagenregelung (6) entlang einer Förderstrecke (2) der Fördereinrichtung (1) bewegt werden, **dadurch gekennzeichnet, dass** an zumindest einer ersten Position (Px) der Förderstrecke (2) ein erster Triggerpunkt (Tx) definiert wird und dem ersten Triggerpunkt (Tx) ein erster, in der Anlagenregelung (6) ausführbarer Programmcode (Fx) mit darauf definierten Bewegungsprofil zugewiesen wird, mit dem eine Transporteinheit (TEn) gemäß eines definierten Bewegungsprofils entlang eines Streckenabschnittes der Förderstrecke (2) bewegt wird, wobei ein Bewegungsprofil ein zeitlicher Verlauf eines Parameters der Bewegung ist, und dieser Programmcode (Fx) für jede Transporteinheit (TEn), die den ersten Triggerpunkt (Tx) erreicht, ausgeführt wird, **dass** jeder Transporteinheit (TEn) ein Speicherbereich (SBn) zugewiesen wird und in diesem Speicherbereich (SBn) spezifische Daten der zugehörigen Transporteinheit (TEn) gespeichert werden **und dass** am ersten Triggerpunkt (Tx) spezifische Daten der sich am Triggerpunkt (Tx) befindlichen Transporteinheit (TEn) aus dem zugewiesenen Speicherbereich (SBn) ausgelesen werden und mit einer im ersten ausführbaren Programmcode (Fx) definierten Bedingung geprüft werden und abhängig vom Ausgang der Prüfung die weitere Bewegung der Transporteinheit (TEn) entlang der Förderstrecke (2) festgelegt wird.

2. Verfahren nach Anspruch 1, **dadurch gekennzeichnet, dass** mit dem Programmcode (Fx) die Transporteinheit (TEn) vom ersten Triggerpunkt (Tx) bis zu einem folgenden Triggerpunkt (T3) bewegt wird, bei Erreichen des folgenden Triggerpunktes (T3) der zugewiesene Programmcode (F3) ausgeführt wird und mit dem zugewiesenen Programmcode (F3) die Bewegung der Transporteinheit (TEn) entlang des Streckenabschnittes der Förderstrecke (2) fortgesetzt wird.

3. Verfahren nach Anspruch 1, **dadurch gekennzeichnet, dass** spezifische Daten der den ersten Triggerpunkt (Tx) erreichenden Transporteinheit (TEn) mit einer im ersten ausführbaren Programmcode (Tx) definierten Bedingung geprüft werden und abhängig vom Ausgang der Prüfung die weitere Bewegung der Transporteinheit (TEn) entlang der Förderstrecke (2) festgelegt wird.

4. Verfahren nach Anspruch 1, **dadurch gekennzeichnet, dass** jede der Anzahl von Transporteinheiten (TEn), vorzugsweise beim Initialisieren der Fördereinrichtung (1), ein eindeutiger Speicherbereich (SBn) zugewiesen wird.

5. Verfahren nach Anspruch 1, **dadurch gekennzeichnet, dass** an zumindest einer zweiten Position (Py) der Förderstrecke (2) ein zweiter Triggerpunkt (Ty) definiert wird und dem zweiten Triggerpunkt (Ty) ein zweiter ausführbarer Programmcode (Fy) zugewiesen wird, mit dem eine weitere Funktionalität der Fördereinrichtung (1) realisiert wird, und dieser zweite Programmcode (Fy) für jede Transporteinheit (TEn), die den zweiten Triggerpunkt (Ty) erreicht ausgeführt wird.

## Claims

1. A method for operating a conveyor installation (1) in the form of a long stator linear motor, wherein a plurality of transport units (TEn) being moved along a conveying track (2) of the conveyor installation (1) by a system controller (6), **characterized in that** a first trigger point (Tx) is defined in at least one first position (Px) on the conveying track (2) and a first program code (Fx) with a movement profile defined therein, which can be executed in the system controller (6) and with which a transport unit (TEn) is moved along a track section of the conveying track (2) in accordance with a defined movement profile, is assigned to the first trigger point (Tx), whereas a movement profile is in principle a progress over time of a parameter of the movement, and this program code (Fx) is executed for each transport unit (TEn) that reaches the first trigger point (Tx), **in that** a memory region (SBn) is allocated to each transport unit (TEn) and specific data relating to the associated transport unit (TEn) are stored in this memory region (SBn), **and in that** specific data regarding the transport unit (TEn) located at the first trigger point (Tx) are read out at the trigger point (Tx) and are checked by means of a condition defined in the first executable program code (Fx), and, depending on the outcome of the check, the further movement of the transport unit (TEn) along the conveying track (2) is defined.

2. The method according to claim 1, **characterized in that** the transport unit (TEn) is moved from the first trigger point (Tx) to a subsequent trigger point (T3) using the program code (Fx), when the subsequent trigger point (T3) is reached the assigned program code (F3) is executed and the movement of the transport unit (TEn) is continued along the track section of the conveying track (2) using the assigned program code (F3).

3. The method according to claim 1, **characterized in that** specific data regarding the transport unit (TEn) that reaches the first trigger point (Tx) are checked by means of a condition defined in the first executable program code (Tx), and, depending on the outcome of the check, the further movement of the transport unit (TEn) along the conveying track (2) is defined.

4. The method according to claim 1, **characterized in that** a unique memory region (SBn) is allocated to each of the number of transport units (TEn), preferably when initializing the conveyor installation (1).

5. The method according to claim 1, **characterized in that** a second trigger point (Ty) is defined in at least a second position (Py) on the conveying track (2) and a second executable program code (Fy) that implements additional functionality of the conveyor installation (1) is assigned to the second trigger point (Ty), and this second program code (Fy) is executed for each transport unit (TEn) that reaches the second trigger point (Ty).

## Revendications

1. Procédé de fonctionnement d'un dispositif de transport (1) en forme de moteur linéaire à stator long, une pluralité d'unités de transport (TEn) étant déplacées le long d'un chemin de transport (2) du dispositif de transport (1) par une commande de système (6), **caractérisé en ce qu'**un premier point de déclenchement (Tx) est défini à au moins une première position (Px) du chemin de transport (2) et **en ce qu'**un premier code de programme (Fx) pouvant être exécuté dans la commande de système (6) et comportant un profil de déplacement défini sur celui-ci est attribué au premier point de déclenchement (Tx), lequel premier code de programme permet de déplacer une unité de transport (TEn) le long d'une section du chemin de transport (2) selon un profil de déplacement défini, un profil de déplacement étant une variation dans le temps d'un paramètre du déplacement, et ledit code de programme (Fx) étant exécuté pour chaque unité de transport (TEn) qui atteint le premier point de déclenchement (Tx), **en ce qu'**une zone de mémoire (SBn) est attribuée à chaque unité de transport (TEn) et **en ce que** des données spécifiques de l'unité de transport (TEn) correspondante sont enregistrées dans ladite zone de mémoire (SBn), **et en ce que**, au premier point de déclenchement (Tx), des données spécifiques de l'unité de transport (TEn) se trouvant au point de déclenchement (Tx) sont lues dans la zone de mémoire (SBn) attribuée et sont contrôlées à l'aide d'une condition définie dans le premier code de programme (Fx) pouvant être exécuté, et **en ce que** la poursuite du déplacement de l'unité de transport (TEn) le long du chemin de transport (2) est déterminée en fonction du résultat du contrôle.

2. Procédé selon la revendication 1, **caractérisé en ce que** l'unité de transport (TEn) est déplacée à l'aide du code de programme (Fx) du premier point de déclenchement (Tx) à un point de déclenchement suivant (T3), **en ce que** le code de programme attribué (F3) est exécuté lorsque le point de déclenchement suivant (T3) est atteint, et **en ce que** le déplacement de l'unité de transport (TEn) le long de la section du chemin de transport (2) est poursuivi à l'aide du code de programme attribué (F3).

3. Procédé selon la revendication 1, **caractérisé en ce que** des données spécifiques de l'unité de transport (TEn) atteignant le premier point de déclenchement (Tx) sont contrôlées à l'aide d'une condition définie dans le premier code de programme exécutable (Tx) et **en ce que** la poursuite du déplacement de l'unité de transport (TEn) le long du chemin de transport (2) est déterminée en fonction du résultat du contrôle.

4. Procédé selon la revendication 1, **caractérisé en ce que** chacun des nombres d'unités de transport (TEn), de préférence lors de l'initialisation du dispositif de transport (1), se voit attribuer une zone de mémoire (SBn) unique.

5. Procédé selon la revendication 1, **caractérisé en ce qu'**un second point de déclenchement (Ty) est défini à au moins une seconde position (Py) du chemin de transport (2) et **en ce qu'**un second code de programme exécutable (Fy) est attribué au second point de déclenchement (Ty), lequel second code de programme exécutable permet de réaliser une autre fonctionnalité du dispositif de transport (1), et ce que ledit second code de programme (Fy) est exécuté pour chaque unité de transport (TEn) qui atteint le second point de déclenchement (Ty).
